# EUROPÄISCHE PATENTSCHRIFT

(11) **EP 0 827 707 B1**
(45) Veröffentlichungstag und Bekanntmachung des Hinweises auf die Patenterteilung: **16.02.2000**
(21) Anmeldenummer: 97114329.2
(22) Anmeldetag: 20.08.1997
(51) Int. Cl.: A47J 31/08

(54) **Pyramidenartiger Filterpapiereinsatz**
Pyramidal paper filter inlay
Papier filtre pyramidal

(30) Priorität: 09.09.1996 DE 29615669 U
(43) Veröffentlichungstag der Anmeldung: 11.03.1998
(73) Patentinhaber: MELITTA HAUSHALTSPRODUKTE GmbH & Co. Kommanditgesellschaft, D-32427 Minden (DE)
(72) Erfinder: Kefenbaum, Martin, 45657 Recklinghausen (DE); Jones, Frank Ronald, 32457 Porta Westfalica (DE)
(74) Vertreter: Stracke, Alexander, Dipl.-Ing.

(56) Entgegenhaltungen:
- EP-A- 0 268 847
- LU-A- 67 526
- US-A- 3 800 954
- US-A- 4 220 541

## Beschreibung

Die vorliegende Erfindung betrifft einen pyramidenartigen Filterpapiereinsatz zur Herstellung von Aromaauszügen aus Kaffee oder Tee.

Filterpapiereinsätze der vorerwähnten Art sind in vielerlei Ausführungsformen bekannt.

In vielen Fällen ist der bei der Herstellung derartiger Filterpapiereinsätze anfallende Verschnitt oder Abfall im Verhältnis zum nutzbaren Füllvolumen relativ groß. Aus LU-A-67526 ist ein Filterpapiereinsatz bekannt, bei dem kein Verschnitt anfällt.

Der vorliegenden Erfindung liegt somit die Aufgabe zugrunde, einen alternativen Filterpapiereinsatz der gattungsgemäßen Art zu schaffen, bei dem der Verschnitt oder Abfall im Verhältnis zum nutzbaren Füllungsvolumen äußerst gering ist.

Diese Aufgabe wird erfindungsgemäß dadurch gelöst, daß der Filterpapiereinsatz im flachliegenden Zustand die Form eines gleichschenkligen, rechtwinkligen Dreieckes aufweist, wobei die zur Beschickung mit Kaffee oder Tee vorgesehene Öffnung des Filterpapiereinsatzes im Bereich der Hypotenuse des Dreieckes liegt.

Ein derart gestalteter Filterpapiereinsatz kann bei vergleichsweise großem nutzbaren Füllungsvolumen äußerst wirtschaftlich hergestellt werden, da zur Schaffung derartiger Filterpapiereinsatz-Formen äußerst günstige Zuschnittsformen verwendet werden können.

Eine praktisch abfallfreie Fertigung derartiger Filterpapiereinsätze ist beispielsweise dann möglich, wenn der Filterpapiereinsatz aus einem einstückigen Zuschnitt in Form eines gleichschenkligen, rechteckigen Dreieckes hergestellt ist, wobei dieser Zuschnitt um eine die Winkelhalbierende des rechten Winkels bildende Faltkante zusammengefaltet ist.

Ein im Vergleich zu bekannten Filterpapiereinsätzen immer noch extrem günstiges Verhältnis zwischen nutzbarem Füllungsvermögen einerseits und gegebenem Abfall oder Verschnitt andererseits wird beispielsweise dadurch erreicht, daß der Filterpapiereinsatz aus einem einstückigen Zuschnitt in Form eines von einer Seite ausgehend bis zur Mitte dreieckig ausgeschnittenen Quadrates besteht, welches um zwei von der gegenüberliegenden Seite bis zur Mitte verlaufende Diagonal-Faltkanten sowie eine ebenfalls von der gegenüberliegenden Seite ausgehende und bis zur Mitte verlaufende Mittelfaltkante zusammengefaltet ist, wobei die aufeinanderliegenden Seitenkanten des dreieckig ausgeschnittenen Abschnittes durch Prägen, Verkleben, Verklammern oder dergleichen miteinander verbunden sind.

Weitere Merkmale der Erfindung sind Gegenstand weiterer Unteransprüche.

In den beigefügten Zeichnungen sind Ausführungsbeispiele sowie Zuschnittsformen von erfindungsgemäßen Filterpapiereinsätzen dargestellt, die im folgenden näher beschrieben werden.

Es zeigen:
- Figur 1: einen erfindungsgemäßen Filterpapiereinsatz in geöffnetem Zustand,
- Figur 2: den Filterpapiereinsatz gemäß Figur 1 im flachliegenden Zustand,
- Figur 3: eine schematische Darstellung einer Filterpapierbahn mit einer Vielzahl von Zuschnitten zur Fertigung von Filterpapiereinsätzen gemäß den Figuren 1 und 2,
- Figur 4: einen flachliegenden Filterpapiereinsatz nach einem weiteren Ausführungsbeispiel der Erfindung,
- Figur 5: den in Figur 4 dargestellten Filterpapiereinsatz in teilweise geöffnetem Zustand,
- Figur 6: eine schematische Darstellung einer Filterpapierbahn mit einer Vielzahl von Zuschnitten zur Herstellung von Filterpapiereinsätzen nach den Figuren 4 und 5.

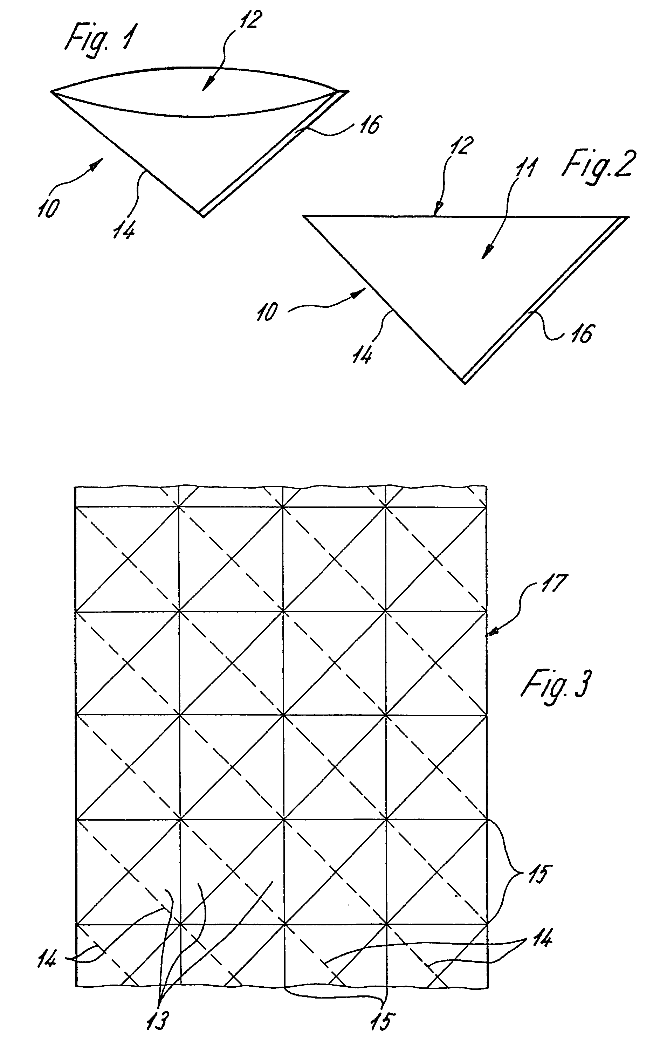

Der in den Figuren 1 und 2 dargestellte pyramidenartige Filterpapiereinsatz 10 zur Herstellung von Aromaauszügen aus Kaffee oder Tee weist im flachliegenden Zustand gemäß Figur 2 die Form eines gleichschenkligen, rechtwinkligen Dreieckes 11 auf, wobei die zur Beschickung mit Kaffee oder Tee vorgesehene Öffnung 12, die in Figur 1 besonders anschaulich erkennbar ist, im Bereich der Hypotenuse des Dreieckes 11 liegt.

Der in den Figuren 1 und 2 gezeigte Filterpapiereinsatz 10 ist aus einem einstückigen Zuschnitt 13 (siehe Figur 3) hergestellt, wobei dieser Zuschnitt 13 eine die Winkelhalbierende des rechten Winkels 15 bildende Faltkante 14 zusammengefaltet ist.

Die an die Faltkante 14 angrenzende Seitenkante 16 kann in bekannter Weise durch eine Prägenaht verschlossen sein. Die vorerwähnte Seitenkante 16 kann alternativ hierzu auch durch eine Klebenaht oder durch eine Klammer verschlossen sein, wobei im letzteren Falle diese Klammer Bestandteil eines Filtergefäßes sein kann, in welches eine entsprechender Filterpapiereinsatz 10 eingesetzt wird.

Insbesondere Figur 3 macht deutlich, daß der erfindungsgemäße Filterpapiereinsatz 10 praktisch verlustfrei aus einer entsprechenden Filterpapierbahn 17 zugeschnitten werden kann.

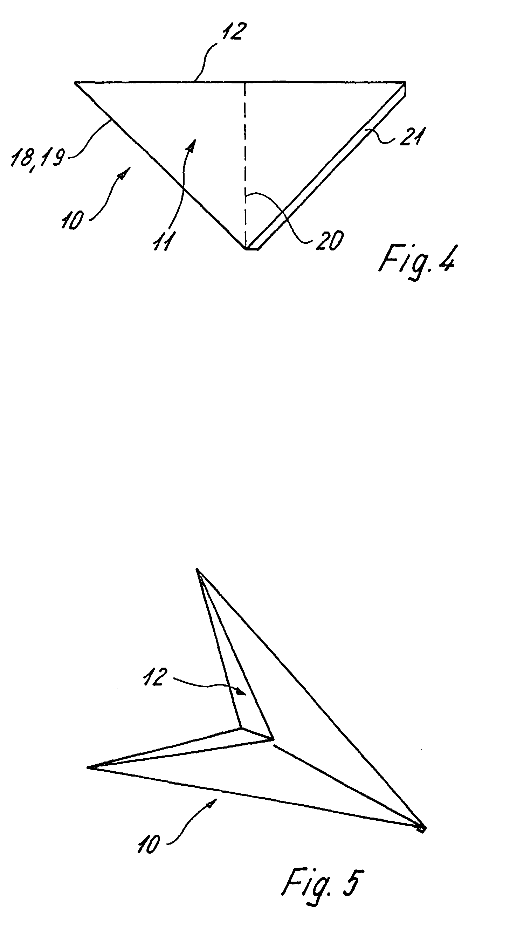

Eine weitere Möglichkeit, einen Filterpapiereinsatz 10 äußerst kostengünstig herstellen zu können, zeigen die Figuren 4 - 6.

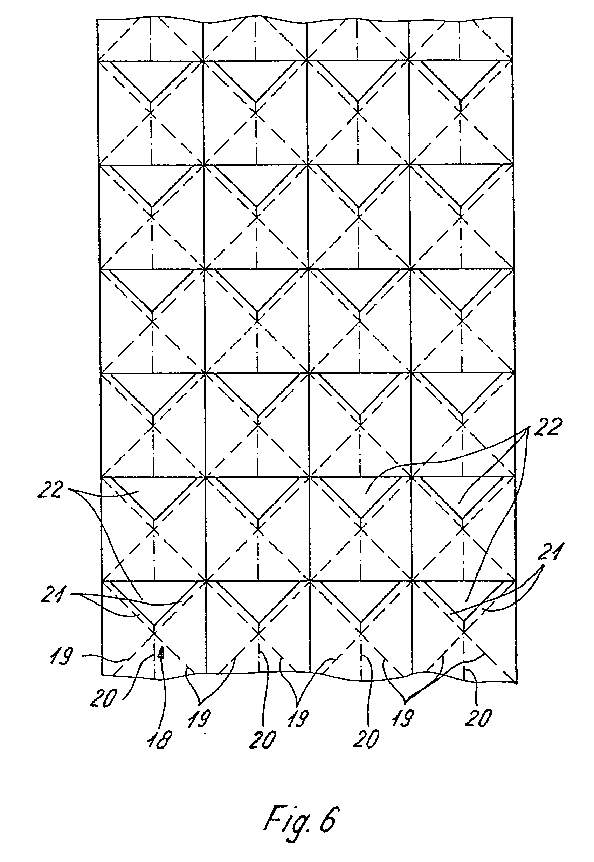

Der Filterpapiereinsatz 10 gemäß den Figuren 4 und 5 weist wiederum im flachliegenden Zuschnitt die Form eines Dreieckes auf, die zu seiner Beschickung mit Kaffee oder Tee vorgesehene Öffnung 12 liegt wiederum im Bereich der Hypotenuse dieses Dreieckes 11.

Der Zuschnitt 18 für einen Filterpapiereinsatz gemäß den Figuren 4 und 5 besteht, wie Figur 6 deutlich zeigt, aus einem Quadrat, welches von einer Seite ausgehend bis zur Mitte dreieckig ausgeschnitten ist und welches um zwei von der gegenüberliegenden Seite bis zur Mitte verlaufende Diagonal-Faltkanten 19 sowie um eine ebenfalls von der gegenüberliegenden Seite ausgehende und bis zur Mitte verlaufende Mittelfaltkante 20 zusammengefaltet ist.

Die aufeinanderliegenden Seitenkanten 21 des dreieckig ausgeschnittenen Abschnitte 22 des Quadrates 18 können durch Prägen, Verkleben, Verklammem oder dergleichen miteinander verbunden sein.

Der durch den dreieckig ausgeschnittenen Abschnitt 22 in Kauf genommene Abfall bei der Herstellung eines Filterpapiereinsatzes 10 gemäß den Figuren 4 und 5 ist im Verhältnis zum nutzbaren Füllungsvolumen des entsprechenden Filterpapiereinsatzes 10 äußerst gering.

## Patentansprüche

1. Pyramidenartiger Filterpapiereinsatz zur Herstellung von Aromaauszügen aus Kaffee oder Tee, **dadurch gekennzeichnet, daß** der Filterpapiereinsatz (10) im flachliegenden Zustand die Form eines gleichschenkligen, rechtwinkligen Dreieckes (11) aufweist, wobei die zur Beschickung mit Kaffee oder Tee vorgesehene Öffnung (12) des Filterpapiereinsatzes (10) im Bereich der Hypotenuse des Dreieckes (11) liegt.

2. Pyramidenartiger Filterpapiereinsatz nach Anspruch 1, **dadurch gekennzeichnet, daß** der Filterpapiereinsatz (10) aus einem einstückigen Zuschnitt (13) in Form eines gleichschenkligen, rechteckigen Dreieckes hergestellt ist, wobei dieser Zuschnitt (13) um eine die Winkelhalbierende des rechten Winkels (15) bildende Faltkante (14) zusammengefaltet ist.

3. Pyramidenartiger Filterpapiereinsatz nach Anspruch 2, **dadurch gekennzeichnet, daß** die an die Faltkante (14) angrenzende Seitenkante (16) durch eine Prägenaht verschlossen ist.

4. Pyramidenartiger Filterpapiereinsatz nach Anspruch 2, **dadurch gekennzeichnet, daß** die an die Faltkante (14) angrenzende Seitenkante (16) durch eine Klebenaht verschlossen ist.

5. Pyramidenartiger Filterpapiereinsatz, nach Anspruch 2, **dadurch gekennzeichnet, daß** die an die Faltkante (14) angrenzende Seitenkante (16) durch eine Klammer oder dergleichen verschlossen ist.

6. Pyramindenartiger Filterpapiereinsatz nach Anspruch 1, **dadurch gekennzeichnet, daß** der Filterpapiereinsatz (10) aus einem einstückigen Zuschnitt (18) in Form eines von einer Seite ausgehend bis zur Mitte dreieckig ausgeschnittenen Quadrates besteht, welches um zwei von der gegenüberliegenden Seite bis zur Mitte verlaufende Diagonal-Faltkanten (19) sowie eine ebenfalls von der gegenüberliegenden Seite ausgehende und bis zur Mitte verlaufende Mittelfaltkante (20) zusammengefaltet ist, wobei die aufeinanderliegenden Seitenkanten (21) des dreieckig ausgeschnittenen Abschnittes (22) durch Prägen, Verkleben, Verklammern oder dergleichen miteinander verbunden sind.

## Claims

1. A pyramid-like filter paper insert for the production of flavour extracts from coffee or tea, characterised in that the filter paper insert (10) in the condition of lying flat is in the shape of an isosceles, right-angled triangle (11), wherein the opening (12) in the filter paper insert (10) for charging with coffee or tea is disposed in the region of the hypotenuse of the triangle (11).

2. A pyramid-like filter paper insert according to claim 1 characterised in that the filter paper insert (10) is made from a one-piece blank (13) in the form of an isosceles, right-angled triangle, wherein said blank (13) is folded together about a fold edge (14) forming the bisector of the right angle (15).

3. A pyramid-like filter paper insert according to claim 2 characterised in that the side edge (16) adjoining the fold edge (14) is closed by an embossed seam.

4. A pyramid-like filter paper insert according to claim 2 characterised in that the side edge (16) adjoining the fold edge (14) is closed by an adhesive seam.

5. A pyramid-like filter paper insert according to claim 2 characterised in that the side edge (16) adjoining the fold edge (14) is closed by a clip or the like.

6. A pyramid-like filter paper insert according to claim 1 characterised in that the filter paper insert (10) comprises a one-piece blank (18) in the form of a square which is cut out from one side to the centre in a triangular configuration and which is folded together about two diagonal fold edges (19) extending from the opposite side to the centre and a central fold edge (20) which also starts from the opposite side and extends to the centre, wherein the side edges (21), which lie one upon the other, of the portion (22) which is cut out in a triangular configuration, are joined together by embossing, adhesive means, clip means or the like.

## Revendications

1. Garniture de papier filtre en forme de pyramide pour produire des extraits aromatiques de café ou de thé,
caractérisée en ce que
la garniture de papier filtre (10) présente à plat, la forme d'un triangle rectangle (11) isocèle dont l'ouverture (12) servant à introduire le café ou le thé se situe au niveau de l'hypoténuse du triangle (11).

2. Garniture de papier filtre de forme pyramidale selon la revendication 1,
caractérisée en ce que
la garniture est réalisée à partir d'un élément découpé (13) en une seule pièce ayant la forme d'un triangle rectangle isocèle, cet élément découpé (13) étant replié autour d'une arête de pliage (14) formée par la bissectrice de l'angle rectangle (15).

3. Garniture de papier filtre de forme pyramidale selon la revendication 2,
caractérisée en ce que
l'arête latérale (16) adjacente à l'arête de pliage (14) est fermée par un cordon gaufré.

4. Garniture de papier filtre de forme pyramidale selon la revendication 2,
caractérisée en ce que
l'arête latérale (16) adjacente à l'arête de pliage (14) est formée par un cordon collé.

5. Garniture de papier filtre de forme pyramidale selon la revendication 2,
caractérisée en ce que
l'arête latérale (16) adjacente à l'arête de pliage (14) est fermée par une pince ou un moyen analogue.

6. Garniture de papier filtre de forme pyramidale selon la revendication 1,
caractérisée en ce que
la garniture de papier filtre (10) est formée d'un élément découpé (18) en une seule pièce en carré avec une découpe triangulaire partant d'un côté et arrivant jusqu'au milieu, cette découpe étant repliée autour de deux arêtes de pliage en diagonale (19) partant de côtés opposés et allant jusqu'au milieu, ainsi que d'une arête de pliage médiane (20), partant de côtés opposés et arrivant jusqu'au milieu, les arêtes de pliage (21) de la découpe triangulaire (22) qui se rejoignent étant reliées par gaufrage, collage, par des pinces ou des moyens analogues.
